# EUROPEAN PATENT SPECIFICATION

(11) **EP 1 748 007 B1**
(45) Date of publication and mention of the grant of the patent: **14.10.2009**
(21) Application number: 06117548.5
(22) Date of filing: 20.07.2006
(51) Int. Cl.: B65G 47/08

(54) **Lot-forming device of varying quantities of objects for a layer to be palletized**
Vorrichtung zum Zusammenstellen von Losen aus veränderlicher Teileanzahl für einen Palettierroboter
Dispositif pour la formation de lots comprenant des quantités variables d'objets pour un palletiseur

(30) Priority: 26.07.2005 IT MI20051444
(43) Date of publication of application: 31.01.2007
(73) Proprietor: OCME S.r.l., 43100 Parma (IT)
(72) Inventor: Gatteschi, Emanuele, 43100, PARMA (IT)
(74) Representative: De Gregori, Antonella

(56) References cited:
- EP-A1- 0 959 002
- EP-A1- 1 550 610

## Description

The present invention relates to a lot-forming device of varying quantities of objects for a layer to be palletized.

For packaging on pallets, objects, such as rolls of toilet paper and/or kitchen rolls packaged according to various configurations, or other objects, are grouped in lots which contribute to forming a layer of a pallet in formation.

In the known art, this takes place in so-called islands or robotized palletizing stations, by means of one or more manipulators equipped with pliers for transferring the lots.

When stable layers are superimposed, they generally consist of lots having different configurations, for example containing a varying number of objects or rows. Furthermore, the lots are arranged inside the layer according to programmable configurations.

Lots consisting of a varying quantity of objects can be formed according to different known procedures. A system can be used, for example, which manages single or multiple objects with pushers from a specific conveyor line. This solution, however, creates problems relating to encumbrance and difficulty in reaching high operating rates.

For example, EP-A1-0 959 002 discloses a lot-forming device according to the preamble of claim 1, wherein individual packed products arriving from a conveyor are collected at a grouping station to form rows which are then moved by a transverse pusher onto a collecting plate.

A second solution envisages the use of a sacking machine which sends lots of objects consisting of varying programmed quantities of objects to the palletizing unit to form a pallet layer excluding the wrapping film.

The lots consisting of varying quantities of objects must respect a sequence, which is obtained by the programming of the sacking machine.

Some lot schemes however are difficult to effect and, if this is possible, can create velocity limits. Above all, the functioning of sacking machines is extremely complex and in the case of plant stoppage, it may be necessary to empty the machine to re-establish the correct sequence of lots to be palletized.

An objective of the present invention is to provide a device for forming lots of varying quantities of objects for a layer to be palletized which overcomes the technical limits of the known art described above.

A further objective of the present invention is to provide a device for forming lots of varying quantities of objects for a layer to be palletized which allows the maximum flexibility to be reached in high-speed palletizing schemes.

Another objective of the present invention is to provide a device for forming lots of varying quantities of objects for a layer to be palletized which is particularly simple and functional, with reduced costs.

These objectives according to the present invention are achieved by providing a device for forming lots of varying quantities of objects for a layer to be palletized as specified in claim 1.

Further characteristics are indicated in the dependent claims.

The characteristics and advantages of a device for forming lots of varying quantities of objects for a layer to be palletized according to the present invention will appear more evident from the following illustrative and non-limiting description, referring to the enclosed schematic drawings, in which:
figure 1 schematically shows a plan of the device for forming lots of varying quantities of objects for a layer to be palletized, according to the present invention;
figure 2 is a raised schematic view of various details of figure 1;
figures 3 to 7 schematically show different functioning hypotheses of the device for forming lots of varying quantities of objects for a layer to be palletized, according to the present invention;
figures 8 to 13, on the other hand, show the sequence of operations for increasing the number of rows of objects to be managed.

With reference to the figures, these show a device for forming lots of varying quantities of objects for a layer to be palletized, indicated as a whole with 10.

In the following description, objects 11 indicate, for example, rolls of toilet paper and/or kitchen rolls packaged according to various configurations, called loose products. One or more objects, or loose products, 11 aligned with each other in a longitudinal direction or parallel to a conveying direction, indicated as F, form a row of objects 12. The term "row of objects" also comprises the limit case in which the row 12 consists of only one object 11.

One or more rows of objects 12 arranged adjacent to each other in a transversal direction with respect to the conveying direction F is defined in the following description as group of rows 13. The term "group of rows" also comprises the limit case in which the group of rows 13 consists of only one row 12.

The group of rows 13 containing a required number of objects 11, in relation to the pre-established palletizing program and suitable for being moved by a robot, not shown, in a subsequent palletizing island 15 are defined as lots 14.

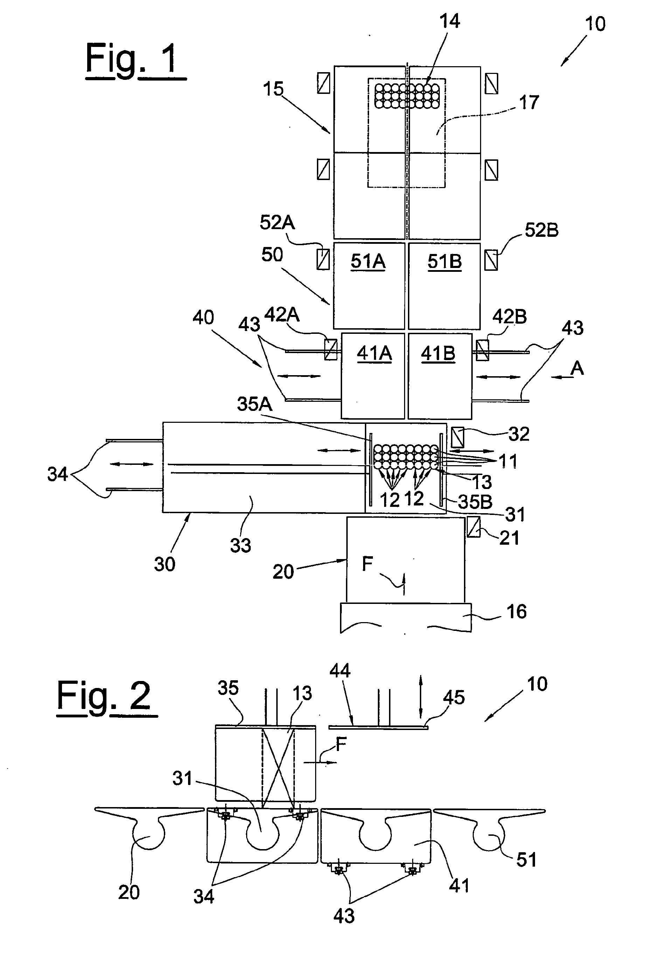

The lot-forming device of varying quantities of objects for a layer to be palletized 10, object of the present invention, is suitable for receiving groups of rows 13 in a constant quantity from a row-forming device 16, schematically shown in the figures, and also for feeding lots 14 consisting of a varying programmed quantity of rows to the palletizing island 15, schematized in figure 1 with two pairs of conveyor belts. The row-forming device 16 consists, for example, of a sacking machine functioning without the application of a plastic film. The palletizing island 15, of the known type, comprises a robot, not shown, equipped with pliers for gripping a lot 14 of objects and transferring it along a roto-translatory trajectory in a predefined position onto a layer 17 of a pallet in formation, schematically shown with the dashed and dotted line.

The device 10, schematically illustrated in figures 1 and 2, comprises a first evacuation belt 20 of groups of rows 13, a first variation station 30 of the number of rows 12, a second station 40 for the alignment and/or transversal separation of the groups of rows 13, and finally a final station 50 for the longitudinal separation of the groups of rows 13.

The first evacuation belt 20, which is equipped with a motor 21, receives groups of rows 13, the same as each other, from the row-forming device 16 and transfers them according to the advance direction F to the subsequent station 30, which comprises a belt 31 equipped with its own motor 32 for transferring the rows 12 in an advance direction F. The station 30 also comprises a side accumulation surface 33 for the rows of objects 12, which moves transversally along guides 34 and a pair of side pushers 35A and 35B, also moveable in a transversal direction independently of each other. The pushers 35A and 35B are activated in position by two controlled servomotors in position, not shown, and push one or more rows 12 of objects from the accumulation surface 33 to the group of rows 13 or vice versa. In this way, it is possible to modify the number of rows 12 of the group of rows 13 coming from the forming device 16 downstream and having a fixed number of rows 12.

The station 40 for the alignment and/or transversal separation of the groups of rows 13 comprises a pair of adjacent conveyor belts 41A and 41B, each having its own controlled motorization 42A and 42B in position for moving the objects along an advance direction F and two brushless motors for movement in a transversal direction along guides 43. The station 40, moreover, is equipped with a stabilizing element 44 for each belt 41A and 41B which, for greater clarity, is only illustrated in the raised view of figure 2. The stabilizing elements 44, which are pneumatic, are integral with the underlying conveyor.

Each stabilizing element 44 comprises a plate 45 moveable in height and suitable for resting on the top of the group of rows 13 of objects 11 to keep them in position during the movement in a transversal direction of the belts 41A and 41B.

The separation of the belts 41A and 41B causes the division of the group of rows 13 into two lots 14 consisting of the desired number of objects 11. Furthermore, by means of the transversal positioning of the belts 41A and 41B, each lot 14 can be fed to the subsequent station 50 in a position which is already aligned with respect to the positioning established by the pallet layer 17. A further movement phase on the part of the robot in the palletizing island 15 can therefore be avoided.

The final station 50, comprises a pair of adjacent belts 51A and 51B, each of which is equipped with an independent motorization 52A and 52B for the advancing of the objects 11 in the direction F.

The pair of belts 51A and 51B advances at the same rate as the belts 41A and 41B of the previous station 40 to transfer the groups of rows 13 in an unaltered configuration. If, on the other hand, the pair of belts 51A and 51B advances with an increasing rate difference with respect to the belts 41A and 41B upstream, causes the longitudinal separation of the group or groups of rows 13 of objects into two or four lots 14.

The increasing rate difference can be obtained indifferently by advancing the belts downstream 51A and 51B at a higher rate than the belts upstream 41A and 41B, or, preferably, by stopping the belts upstream 41A and 41B after transferring the desired number of objects 11 to the last pair of belts 51A and 51B.

Furthermore, the belts 51A and 51B can be activated with a relative different rate to obtain further configurations in the transfer of objects.

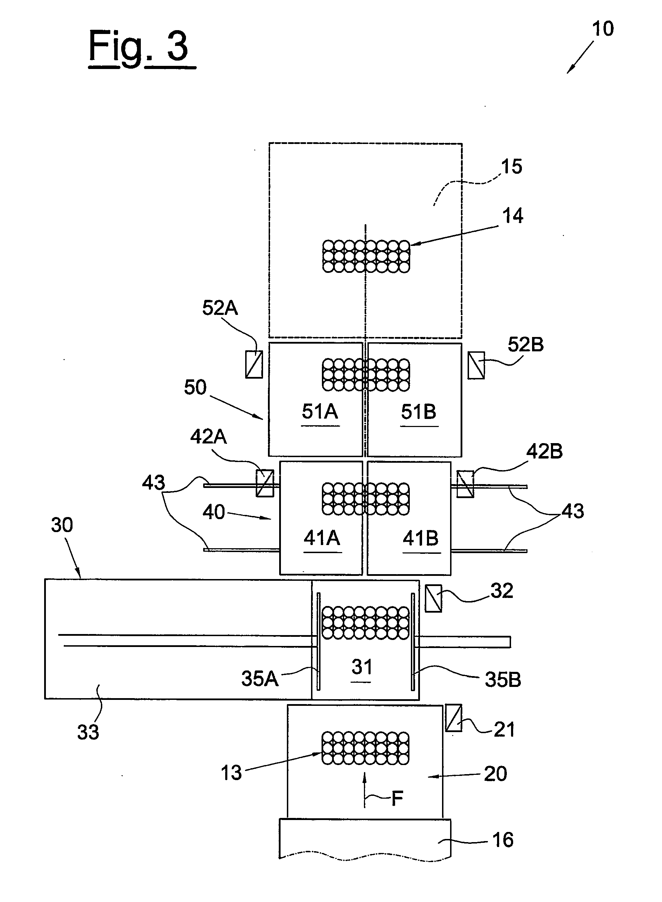

Figures 3 to 7 schematically show different functioning hypotheses of the lot-forming device of varying quantities of objects for a layer to be palletized 10, according to the present invention. Each figure schematically shows the run of a group of rows of objects through the device 10 according to the present invention, photographed in succession.

Figure 3 shows, for illustrative and non-limiting purposes, a group of eight rows of objects, in which each row 12 comprises only one object 11, consisting of a loose product of three rolls. This group of rows coming from the forming device 16 passes along the direction F through all the stations of the device 10, object of the present invention, without undergoing manipulation. In this case, the group of rows 13 has already formed the lot 14 suitable for the palletizing program and is already correctly aligned in a transversal direction to the advance direction F with respect to the layer 17 in formation.

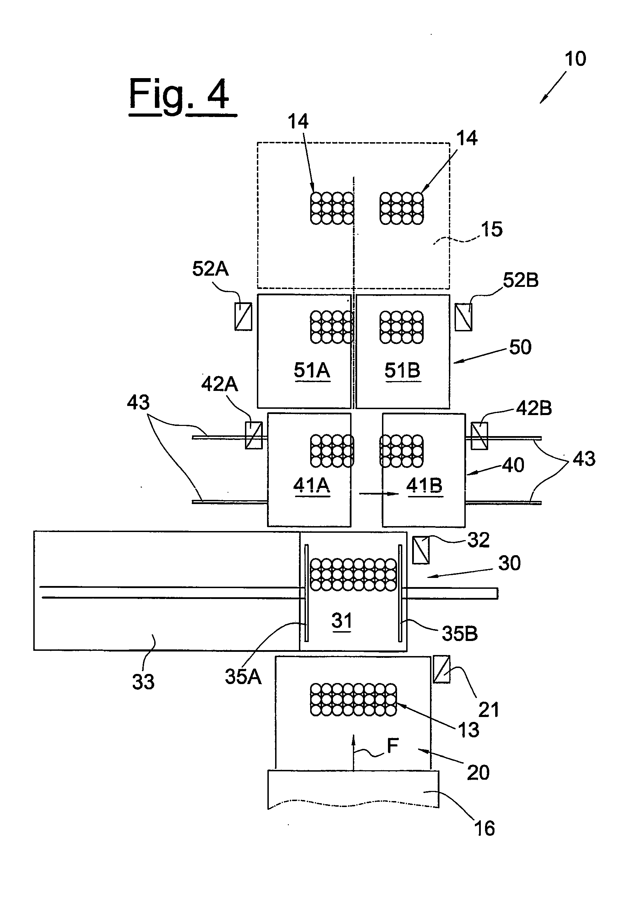

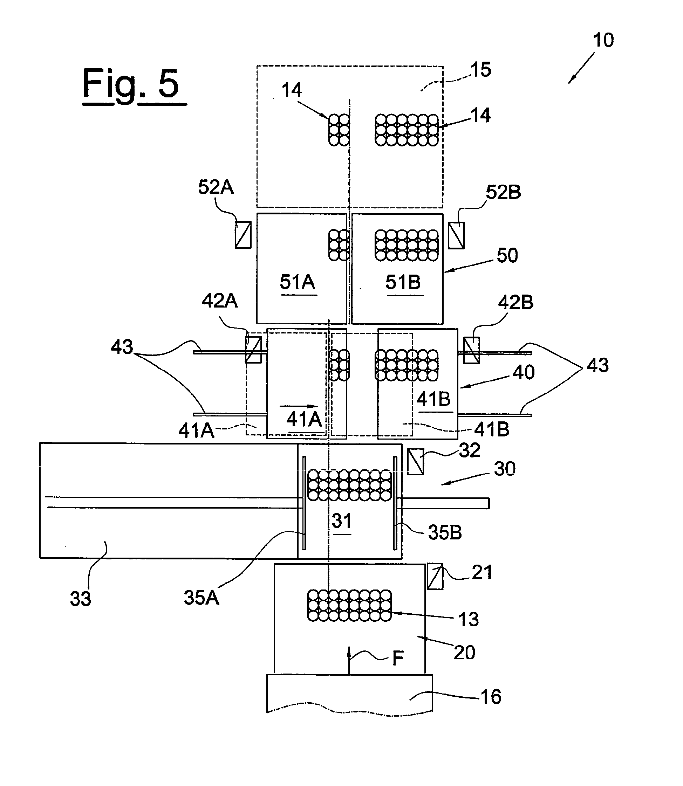

Figures 4 and 5, on the other hand, show two examples, in which the group of rows 13 coming from the forming device 16, for example again consisting of a number of eight rows 12 is respectively transversally divided into two equal lots 14 or into two lots 14 having different quantities of rows 12.

Before receiving the group of rows 13 from the first station 30, the pair of belts 41A and 41B can be moved transversally so that the sides are flanked on the division point of the group of rows 13, as shown in figure 5 with the dashed line.

After receiving the group of rows 13, at least one of the belts 41A or 41B is moved in a transversal direction away from the other belt, to align the lot 14 in the position required for the layer 17. In the example of figure 4, the belt 41B alone is moved transversally; in figure 5 both of the belts 41A and 41B are moved to align the lots 14.

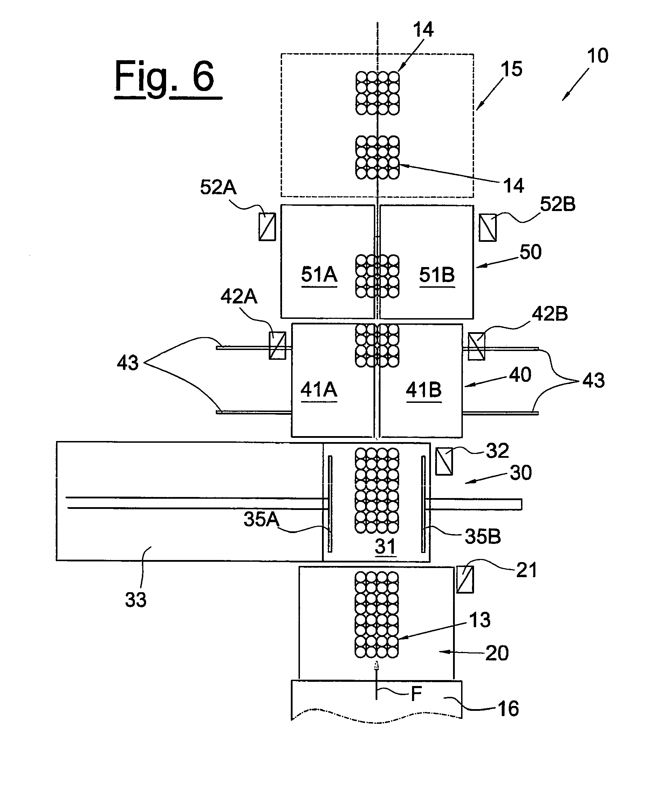

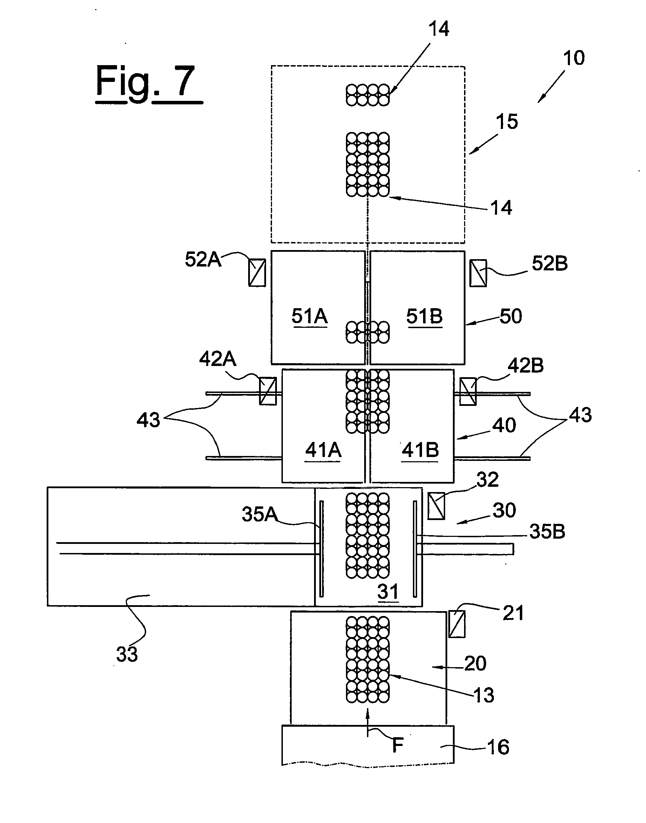

Figures 6 and 7, on the other hand, show two examples of a longitudinal division of a group of rows 13, in two equal lots or in different lots respectively. For illustrative purposes, groups of rows 13 consisting of four rows 12, each having four objects 11, are shown.

The pair of belts 51A and 51B move, in a predefined time, a desired number of objects 11 with respect to the subsequent objects 11 coming from the belts upstream. During the time necessary for effecting the longitudinal separation of the objects 11, the advancing of a new group of rows 13 in the previous stations upstream is stopped.

A group of rows 13 coming from the forming device 16 can be subjected to any of the manipulations described or to any combination thereof, i.e. longitudinal separation, transversal separation and alignment.

A further operation which can be effected by the device 10, object of the present invention on the group of rows 13 coming from the forming apparatus 16 consists in the variation of the number of rows 12, i.e. in increasing or reducing it.

If necessary for certain palletizing schemes, it is possible to increase or decrease the number of objects which will form the lot 14.

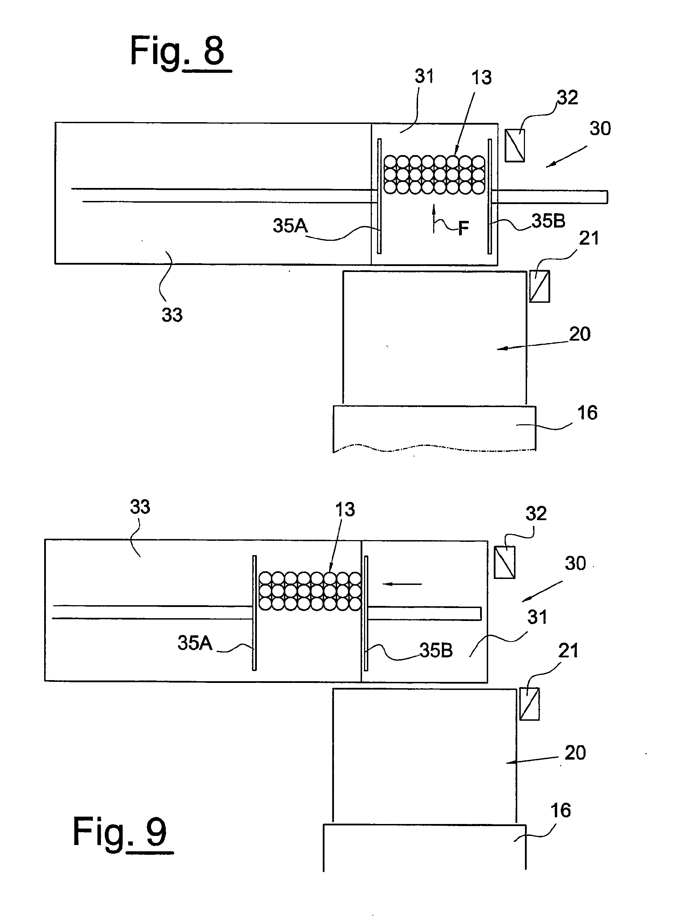

Figures 8 to 13 show the sequence of operations for the loading of rows 12 of objects on the accumulation surface 33 and the subsequent transfer of a row 12 to a group of objects 13 fed to the station 30 for varying the number of rows 12.

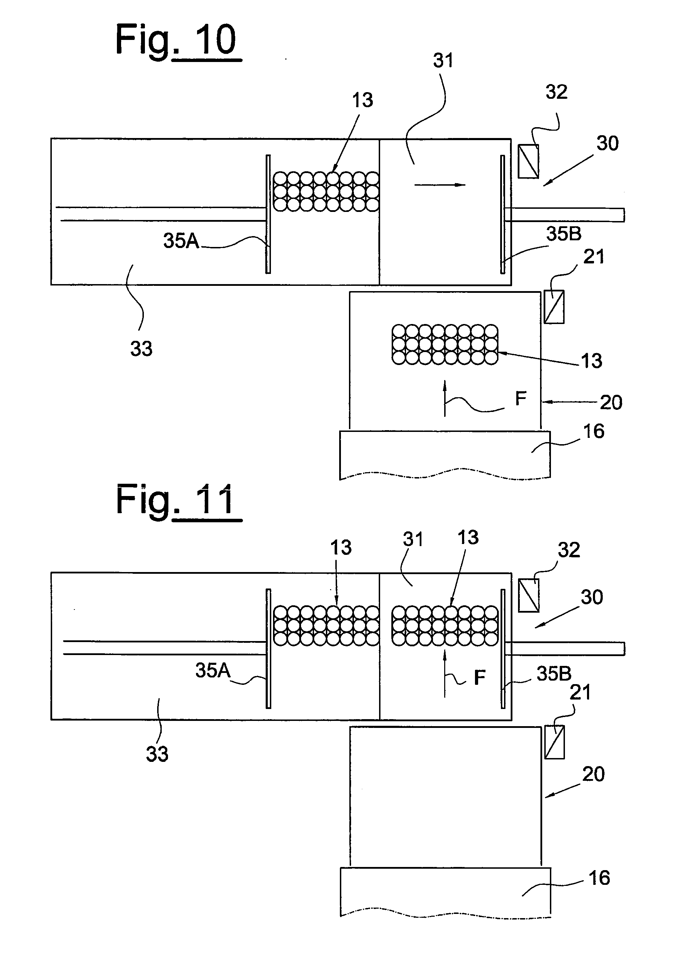

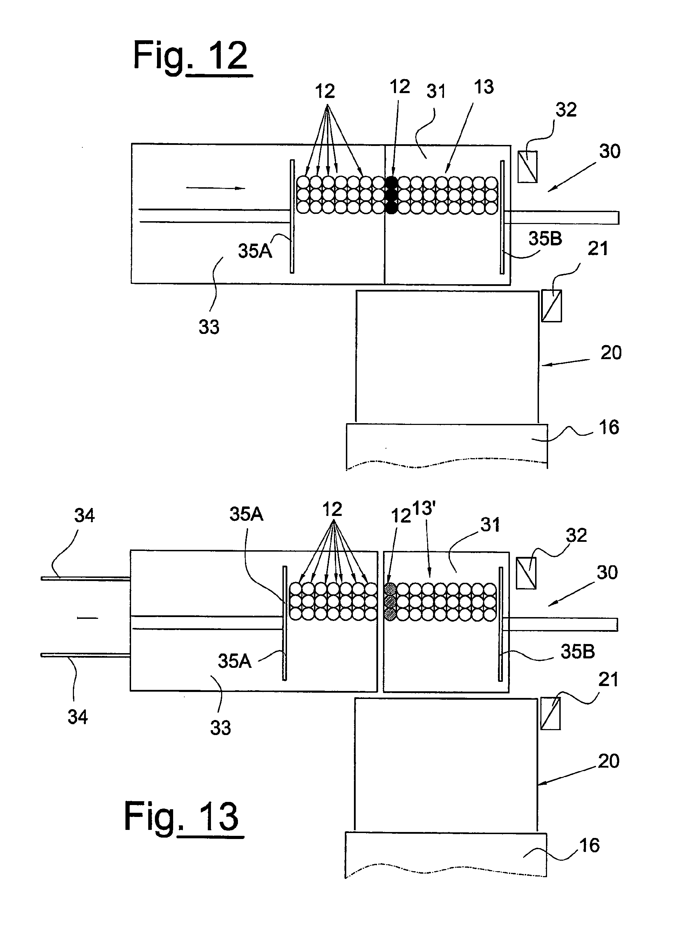

A group of rows 13, for example having a configuration such as that of figures 3 to 5, with its passage through the station 30 (figure 8), is intercepted by the pair of side pushers 35A and 35B and is transferred onto the accumulation surface 33 (figure 9). The first pusher 35A remains resting against the accumulated objects and the second pusher 35B returns to its initial position (figure 10). When the system reveals, in accordance with the palletizing program, that a group of rows 13 which needs to be increased by at least one row 12 of objects, is being transferred to the variation station 30 of the number of rows (figure 11), the row 12 (figure 12) is added, for example, by the movement of the first pusher 35A, to the group of rows 13, kept in position on the opposite side by the second pusher 35B.

A slight transversal shifting of the accumulation surface 33 along the guides 34 (figure 13) avoids interference between the objects of a new group of rows 13' thus formed with the objects still accumulated on the surface 33 with the advancing of the new group of rows 13' in the direction F.

The functioning of the station 30 for the reduction of one or more rows 12 of the group of rows 13 coming from the forming device 16 is completely equivalent to what has already been illustrated and described for the increase of at least one row 12.

The new group of rows 13' can therefore be subjected to the separation and alignment operations described above for the preparation of a lot 14 suitable for the layer 17 of the pallet being prepared.

The lot-forming device of varying quantities of objects for a layer to be palletized according to the present invention has the advantage that it can be fed with a fixed quantity of objects, i.e. with a predefined and constant sequence of products, coming for example from a standard sacking machine which produces lots with fixed quantities of objects without pre-established unloading sequences of the products.

The lot-forming device of varying quantities of objects for a layer to be palletized according to the present invention advantageously allows the use of a single palletizing robot for the formation of the layers.

Furthermore, the rates are advantageously higher as the operations are carried out on multiple lots.

The described lot-forming device of varying quantities of objects for a layer to be palletized can undergo numerous modifications and variants, the scope of protection of the invention being defined by the appended claims. In practice, the materials used, as also the dimensions, can vary according to technical demands.

## Claims

1. A lot-forming device of varying quantities of objects for a palletizing layer comprising at least a first station (30) for the variation of the number of rows (12) of a group of rows (13) fed to the device (10) with pre-established and constant characteristics, wherein said first station (30) comprises a motorized advance belt (31), a side accumulation surface (33) for rows (12) of objects (11), in addition to a pair of side pushers (35A, 35B) for moving the rows (12) and/or groups of rows (13) of objects **characterized in that**, it comprises a second station (40) for the separation and/or transversal alignment of the group of rows (13), wherein said second station (40) for the separation and/or transversal alignment of said group of rows (13) comprises a pair of adjacent motorized advance belts (41A and 41B), at least one of said belts (41A and 41B) being moveable along guides (43) orthogonal to the advance direction (F) for the separation and/or transversal alignment of the groups of rows (13).

2. The device according to claim 1, **characterized in that** said accumulation surface (33) can be moved transversally along guides (34) away from and towards said belt (31).

3. The device according to claim 1, **characterized in that** said pair of side pushers (35A, 35B) can each be independently moved transversally with controlled servomotors in position.

4. The device according to claim 1, **characterized in that** both of said advance belts (41A and 41B) can be moved along said guides (43).

5. The device according to claim 4, **characterized in that** said second station (40) comprises a pneumatic stabilizing element (44) integral with each of said underlying belts (41A and 41B) and equipped with a plate (45) moveable in height.

6. The device according to claim 1, **characterized in that** it comprises a first evacuation belt (20) of groups of rows (13) according to an advance direction (F) situated upstream of said first station (30) for varying the number of rows (12), said belt (20) being equipped with a motor (21).

7. The device according to claim 1, **characterized in that** it comprises a final station (50) for the longitudinal separation of said group of rows (13), wherein said final station (50) comprises a pair of adjacent belts (51A and 51B), each equipped with an independent motorization (52A and 52B), for the advancing of the objects (11) in the direction (F), said belts (51A and 51B) having the possibility of being activated at different rates with respect to said pair of belts (41A and 41B) of said second station (40) for the separation and/or transversal alignment of said group of rows (13).

## Patentansprüche

1. Vorrichtung zum Bilden von Losen bzw. Posten mit sich ändernden Mengen von Objekten für eine Palettisierungsschicht, mit zumindest einer ersten Station (30) für die Änderung der Anzahl von Reihen (12) einer Gruppe von Reihen (13), die der Vorrichtung (10) mit vorher festgelegten und konstanten Eigenschaften zugeführt wird, wobei die erste Station (30) ein motorisiertes Vorschubband (31), eine Seitensammelfläche (33) für Reihen (12) von Objekten (11) zusätzlich zu einem Paar von Seitenschubeinrichtungen (35A, 35B) zur Bewegung der Reihen (12) und/oder Gruppen von Reihen (13) von Objekten umfasst, **dadurch gekennzeichnet, dass** sie eine zweite Station (40) für die Trennung und/oder transversale Ausrichtung der Gruppe von Reihen (13) umfasst, wobei die zweite Station (40) für die Trennung und/oder transversale Ausrichtung der Gruppe von Reihen (13) ein Paar benachbarter motorisierter Vorschubbänder (41A und 41B) umfasst, wobei zumindest eines der Bänder (41A und 41 B) entlang von Führungen (43) rechtwinklig zu der Vorschubrichtung (F) für die Trennung und/oder transversale Ausrichtung der Gruppen von Reihen (13) bewegbar ist.

2. Vorrichtung nach Anspruch 1, **dadurch gekennzeichnet, dass** die Sammelfläche (33) transversal entlang von Führungen (34) weg von und in Richtung zu dem Band (31) bewegt werden kann.

3. Vorrichtung nach Anspruch 1, **dadurch gekennzeichnet, dass** das Paar von Seitenschubeinrichtungen (35A, 35B) jeweils unabhängig transversal mit gesteuerten Servomotoren in Position bewegt werden kann.

4. Vorrichtung nach Anspruch 1, **dadurch gekennzeichnet, dass** beide Vorschubbänder (41A und 41B) entlang der Führungen (43) bewegt werden können.

5. Vorrichtung nach Anspruch 4, **dadurch gekennzeichnet, dass** die zweite Station (40) ein pneumatisches Stabilisierungselement (44) umfasst, das mit jedem der darunter liegenden Bänder (41A und 41 B) einteilig ist und mit einer Platte (45) ausgestattet ist, deren Höhe bewegbar ist.

6. Vorrichtung nach Anspruch 1, **dadurch gekennzeichnet, dass** sie ein erstes Evakuierungsband (20) von Gruppen von Reihen (13) gemäß einer Vorschubrichtung (F) umfasst, das oberstromig der ersten Station (30) angeordnet ist, um die Anzahl von Reihen (12) zu ändern, wobei das Band (20) mit einem Motor (21) ausgestattet ist.

7. Vorrichtung nach Anspruch 1, **dadurch gekennzeichnet, dass** sie eine Endstation (50) für die Längstrennung der Gruppen von Reihen (13) umfasst, wobei die Endstation (50) ein Paar benachbarter Bänder (51A und 51B), die jeweils mit einer unabhängigen Motorisierung (52A und 52B) ausgestattet sind, für den Vorschub der Objekte (11) in der Richtung (F) umfasst, wobei die Bänder (51A und 5 1 B) die Möglichkeit zur Aktivierung bei verschiedenen Raten bzw. Geschwindigkeiten in Bezug auf das Paar von Bändern (41A und 41B) der zweiten Station (40) für die Trennung und/oder transversale Ausrichtung der Gruppe von Reihen (13) besitzen.

## Revendications

1. Dispositif pour la formation de lots de quantités variables d'objets pour un palettiseur, comprenant au moins une première station (30) pour la variation du nombre de rangées (12) d'un groupe de rangées (13) alimentées au dispositif (10) avec des caractéristiques préétablies et constantes, dans lequel ladite première station (30) comprend une courroie d'avancement motorisée (31), une surface d'accumulation latérale (33) pour les rangées (12) d'objets (11), en plus d'une paire de poussoirs latéraux (35A, 35B) pour déplacer les rangées (12) et/ou les groupes de rangées (13) d'objets, **caractérisé en ce qu'**il comprend une seconde station (40) pour la séparation et/ou l'alignement transversal du groupe de rangées (13), dans lequel ladite seconde station (40) pour la séparation et/ou l'alignement transversal dudit groupe de rangées (13) comprend une paire de courroies d'avancement motorisées adjacentes (41A et 41B), au moins l'une desdites courroies (41A et 41B) étant mobile le long de guides (43) orthogonaux à la direction d'avancement (F) pour la séparation et/ou l'alignement transversal des groupes de rangées (13).

2. Dispositif selon la revendication 1, **caractérisé en ce que** ladite surface d'accumulation (33) peut être déplacée transversalement le long des guides (34) en éloignement et en rapprochement de ladite courroie (31).

3. Dispositif selon la revendication 1**, caractérisé en ce que** chacun de ladite paire de poussoirs latéraux (35A, 35B) peut être déplacé indépendamment transversalement avec des servomoteurs commandés en position.

4. Dispositif selon la revendication 1, **caractérisé en ce que** les deux desdites courroies d'avancement (41A et 41B) peuvent être déplacées le long desdits guides (43).

5. Dispositif selon la revendication 4, **caractérisé en ce que** ladite seconde station (40) comprend un élément pneumatique de stabilisation (44) faisant partie intégrante de chacune desdites courroies (41A et 41B) sous-jacentes et doté d'une plaque (45) mobile en hauteur.

6. Dispositif selon la revendication 1, **caractérisé en ce qu'**il comprend une première courroie d'évacuation (20) de groupes de rangées (13) selon une direction d'avancement (F) située en amont de ladite première station (30) pour modifier le nombre de rangées (12), ladite courroie (20) étant dotée d'un moteur (21).

7. Dispositif selon la revendication 1, **caractérisé en ce qu'**il comprend une station finale (50) pour la séparation longitudinale dudit groupe de rangées (13), dans lequel ladite station finale (50) comprend une paire de courroies adjacentes (51A et 51B), chacune dotée d'une motorisation indépendante (52A et 52B), pour l'avancement des objets (11) dans la direction (F), lesdites courroies (51A et 51B) pouvant être activées à différentes vitesses par rapport à ladite paire de courroies (41A et 41B) de ladite seconde station (40) pour la séparation et/ou l'alignement transversal dudit groupe de rangées (13).
